# EUROPÄISCHE PATENTSCHRIFT

(11) **EP 3 937 451 B1**
(45) Veröffentlichungstag und Bekanntmachung des Hinweises auf die Patenterteilung: **20.04.2022**
(21) Anmeldenummer: 20184912.2
(22) Anmeldetag: 09.07.2020
(51) Int. Cl.: H04L 9/40, H04L 67/12

(54) **VERFAHREN ZU HERSTELLUNG EINER VERSCHLÜSSELTEN VERBINDUNG**
METHOD FOR PRODUCING AN ENCRYPTED CONNECTION
PROCÉDÉ DE GÉNÉRATION D'UNE CONNEXION CRYPTÉE

(43) Veröffentlichungstag der Anmeldung: 12.01.2022
(73) Patentinhaber: HAUSHELD Aktiengesellschaft, 41061 Mönchengladbach (DE)
(72) Erfinder: Stoffelsma, Bouke Christiaan, 41329 Mönchengladbach (DE)
(74) Vertreter: Hauck Patentanwaltspartnerschaft mbB

(56) Entgegenhaltungen:
- DE-A1-102017 110 000
- GB-A- 2 533 338
- Bundesamt Für Sicherheit In Der Informationstechnik Bsi: "Technische Richtline BSI TR-03109-1 Anforderungen an die Interoperabilit?t der Kommunikationseinheit eines intelligenen Messsystems", , 18. März 2013 (2013-03-18), XP055419352, Gefunden im Internet: URL:https://www.bsi.bund.de/SharedDocs/Dow nloads/DE/BSI/Publikationen/TechnischeRich tlinien/TR03109/TR03109-1.pdf?__blob=publi cationFile&v=1 [gefunden am 2017-10-26]

## Beschreibung

Die vorliegende Anmeldung betrifft ein Verfahren zur Herstellung einer verschlüsselten Verbindung zwischen einem benutzerseitigen Endgerät und einem Smart-Meter-Gateway. Die verschlüsselte Verbindung soll dazu eingesetzt werden, dem Endverbraucher von seinem Smart-Meter-Gateway stammende Messwerte unbegrenzt und zugleich sicher an einem benutzerseitigen Endgerät zur Verfügung zu stellen.

Das Smart-Meter-Gateway besitzt regelmäßig eine WAN-Schnittstelle und eine HAN-Schnittstelle. Die WAN-Schnittstelle (Wide Area Network) ist eine öffentlich zugängliche Schnittstelle, über die nur ausgewählte Messwerte ausgelesen werden können. Die Auswahl der auslesbaren Messwerte ist hierbei auf den Umfang der für die jeweilige Aufgabe notwendigen Anzahl von Messwerten begrenzt und stellt typischerweise nur eine kleine Untermenge der insgesamt an dem Smart-Meter-Gateway anfallenden Messwerte dar. Die an dem Smart-Meter-Gateway vorgesehene HAN-Schnittstelle ist eine nur lokal zugängliche Schnittstelle, an die ein Letztverbraucher direkt sein Endgerät anschließen kann, um sich nach einer Authentifizierung an der HAN-Schnittstelle alle erhobenen Messwerte anzeigen zu lassen.

Die Vorgaben, welche Messwerte wie häufig über die WAN-Schnittstelle an Dritte übermittelt werden, werden von einem vertrauenswürdigen Smart-Meter-Gateway-Administrator im Smart-Meter-Gateway fallweise konfiguriert. Ziel dieser Architektur ist, jeweils nur diejenigen Messwerte bereitzustellen, auf die ein Dritter einen gesetzlichen Anspruch haben könnte oder solche Daten, für deren Übermittlung an einen Dritten der Letztverbraucher eingewilligt hat. Typischerweise sind Smart-Meter-Gateways so konfiguriert, dass insbesondere Messreihen, die auch Rückschlüsse auf das persönliche Nutzungsverhalten des Letztverbrauchers ermöglichen, nur dem Letztverbraucher angezeigt und Dritten nicht übermittelt werden.

Im Rahmen des Einsatzes von Smart-Meter-Gateways ist es grundsätzlich vorgesehen, dass eine Datenübertragung über die öffentlich erreichbare WAN-Schnittstelle des Smart-Meter-Gateways nur dann erfolgt, wenn die Gegenstelle sicher authentifiziert wurde. Hierfür prüft das Smart-Meter-Gateway, ob es mit einer Gegenstelle kommuniziert, die sich durch ein Zertifikat ausweisen kann. Diese Zertifikate sind Teil der Public-Key-Infrastruktur des Bundesamtes für Sicherheit in der Informationstechnik (BSI). Die Sicherheitsanforderungen des BSI erfordern, dass zur Authentifizierung der Kommunikationsteilnehmer an der WAN-Schnittstelle immer nur Zertifikate eingesetzt werden dürfen, deren Schlüsselmaterial in einem dafür eingerichteten Hardware-Security-System verbleibt. Das BSI stellt Zertifikate aus der Smart-Meter-Public-Key-Infrastruktur lediglich für ausgewählte Teilnehmer des Energiemarktes und nicht für Endverbraucher aus.

Auf der lokalen HAN-Schnittstelle des Smart-Meter-Gateways wiederum ist es nicht erforderlich, dass sich ein Kommunikationsteilnehmer mit einem Zertifikat der Public-Key-Infrastruktur authentifiziert. Vielmehr genügt es, zur Authentifizierung einen Benutzernamen und ein Passwort zu kennen oder ein Zertifikat anzuwenden, dessen privates Schlüsselmaterial nicht besonders hohen Sicherheitsanforderungen genügt.

Nachteilig bei der Anzeige von Messwerten über die hierfür vorgesehene lokale HAN-Schnittstelle ist eine technisch für viele Kunden schwierige Anwendung. So ist standardmäßig an der HAN-Schnittstelle lediglich eine statische IP-Adresse vorgesehen und der Zugang zur HAN-Schnittstelle erfolgt mittels eines unmittelbar zu kontaktierenden Ethernet-Anschlusses am Smart-Meter-Gateway. Damit ist eine direkte Anzeige von Messwerten für benutzerseitige Endgeräte, wie beispielsweise Smartphones, Tablets, Laptops oder andere Computer nicht möglich, es sei denn es erfolgt eine Anbindung über den Ethernet-Anschluss.

Bei vielen Installationen befindet sich das Smart-Meter-Gateway an einem Einbauort, bei dem die HAN-Schnittstelle schwer zugänglich ist, beispielsweise im Sicherungskasten im Hausanschlussraum. Eine zusätzliche Schwierigkeit besteht darin, dass am benutzerseitigen Endgerät eine feste IP-Adresse zwingend zum Netzwerk-Adressbereich des Smart-Meter-Gateways eingestellt werden muss. Dies ist vielen Benutzern nicht geläufig und zudem technisch zu aufwendig. Die Einbringung eines Smart-Meter-Gateways in ein Heimnetz mit einem Internet-Router des Letztverbrauchers würde das gesamte Sicherheitskonzept der HAN-Schnittstelle und der WAN-Schnittstelle unterlaufen. Angreifern wäre eine Umgehung der Sicherheitsmechanismen der WAN-Schnittstelle des Smart-Meter-Gateways möglich und diese hätten so freien Zugriff auf schützenswerte Daten.

Es kommt auch vor, dass Anbieter den Letztverbrauchern eine Übermittlung aller Messwerte aus dem Smart-Meter-Gateway an eine zentrale Stelle vorschlagen. Der Letztverbraucher muss hierin einwilligen, dann können alle Messwerte zentral gesammelt und in einem Portal für den Letztverbraucher aufbereitet werden. Der Nachteil dieses Vorgehens ist jedoch, dass die Messwerte damit nicht mehr geschützt im Smart-Meter-Gateway gespeichert bleiben, sondern damit auch dem Portalbetreiber bekannt sind und den geschützten Bereich des Smart-Meter-Gateways verlassen haben. Der beabsichtigte dezentrale Schutz der Daten im Smart-Meter-Gateway wird durch die Replikation sämtlicher Messwerte in einen zentralen Speicher zunichte gemacht.

Aus dem Stand der Technik ist grundsätzlich bekannt, Internetverbindungen zu authentifizieren und zu verschlüsseln. Eine heute übliche Verschlüsselung ist TLS (Transport Layer Security), bei der ein Server durch eine Zertifizierungs- und Validierungsstelle zertifiziert ist. Bei der Zertifizierung wird der öffentliche Schlüssel zertifiziert. Der öffentliche Schlüssel des Empfängers ist dem Sender bekannt. Er benutzt ihn zum Aushandeln eines in der Regel symmetrischen Sitzungsschlüssels zum Verschlüsseln der Daten. Anschließend können die verschlüsselten Daten oder ein die Daten verschlüsselnder Sitzungsschlüssel aber nicht mehr mit dem öffentlichen Schlüssel entschlüsselt werden. Dafür braucht es den privaten Schlüssel, der nur dem Empfänger bekannt ist und deshalb zwingend geheim gehalten werden muss. Bevor nun der Sender Daten verschlüsseln kann, muss er jedoch zweifelsfrei feststellen, ob der öffentliche Schlüssel, den er vom Empfänger mitgeteilt bekommen hat, auch dem Empfänger gehört, dem er die Daten verschlüsselt schicken will. Hierzu werden beispielsweise Domainname, der öffentliche Schlüssel, ein Ablaufdatum und die Instanz, die die Vertrauenswürdigkeit der Daten bestätigt hat, in einem Zertifikat zusammengefasst. Durch das Zertifikat authentisiert sich der Empfänger gegenüber dem Sender bzw. der Server gegenüber dem Client. Gleichzeitig kann der Client das Zertifikat überprüfen (Validierung) und damit die Authentizität feststellen.

Um ein solches Zertifikat von einer Zertifizierungsstelle ausstellen (signieren) zu lassen, ist eine CSR-Anfrage (Certificate Signing Request) erforderlich. Hierbei erzeugt der Serverbetreiber ein Schlüsselpaar, bestehend aus einem öffentlichen und einem privaten Schlüssel. Der Serverbetreiber erstellt eine CSR-Anfrage für von ihm gewünschte Angaben einschließlich des öffentlichen Schlüssels und sendet diese an eine CA-Einheit (Certification Authority). Die CA-Einheit prüft ausgewählte Angaben (z.B. die Verfügungshoheit über eine Domain oder einen Firmennamen oder eine Firmenanschrift oder eine Registernummer) der CSR-Anfrage. Ist alles korrekt, erstellt die CA-Einheit ein Zertifikat und schickt es an den Serverbetreiber zurück. Später kann die Identität durch eine Validierung des Zertifikats bestätigt werden.

Aus DE 10 2017 110 000 A1 ist Verfahren zum Betreiben einer gebäudeseitig installierbaren Kommunikationseinheit bekannt geworden. Für diese wurde vorgeschlagen, dass ein Zählerstand von einem entfernt angeordneten Verbrauchszähler über eine dazwischengeschaltete Kommunikationseinheit über ein Weitverkehrsnetz (WAN) übertragen wird.

Aus EP 2 709 374 A2 ist eine Vorrichtung zum Einsatz in einem Messsystem zur Erfassung von übertragener Energie bekannt geworden. Hierbei ist zur Kommunikation mit einem Smart-Meter-Gateway vorgesehen, ein Breitband-Powerline-Modem anzuschließen. Dabei ist das Smart-Meter-Gateway über eine Schnittstelle mit dem Breitband-Powerline-Modem verbunden, das über eine WAN-Schnittstelle kommuniziert.

Aus US 2013/0274936 A1 ist ein System bekannt geworden, bei dem Energieverbrauch und Kosten zentral gesteuert werden können.

Der Erfindung liegt die Aufgabe zugrunde, ein Verfahren zur Herstellung einer verschlüsselten Verbindung zwischen einem benutzerseitigen Endgerät und einem Smart-Meter-Gateway bereitzustellen, das bei einfacher Einrichtung für den Letztverbraucher die für das Smart-Meter-Gateway vorgesehenen Sicherheitsanforderungen erfüllt.

Erfindungsgemäß wird die Aufgabe durch das Verfahren mit den Merkmalen aus Anspruch 1 gelöst. Vorteilhafte Ausgestaltungen bilden die Gegenstände der Unteransprüche.

Das erfindungsgemäße Verfahren nach Anspruch 1 ist vorgesehen und bestimmt, eine verschlüsselte Verbindung zwischen einem benutzerseitigen Endgerät und einem Smart-Meter-Gateway an seiner HAN-Schnittstelle bereitzustellen. Das Smart-Meter-Gateway besitzt in an sich bekannter Weise mindestens eine WAN-Schnittstelle und eine HAN-Schnittstelle. Zum Aufbau der verschlüsselten Verbindung wird eine Display-Service-Einheit, eine Client-Einheit und ein Smart-Meter-Gateway bereitgestellt. Die Einheiten sind zum Aufbau einer verschlüsselten End-zu-End-Verbindung ausgebildet. Zunächst erfolgt die Anmeldung des benutzerseitigen Endgeräts für eine verschlüsselte Verbindung an der Display-Service-Einheit. Die Display-Service-Einheit verfügt über ein erstes Zertifikat, mit dem ihre Authentizität bestätigt werden kann.

In einem nachfolgenden Schritt wird, ansprechend auf die Anmeldung des benutzerseitigen Endgeräts, mindestens ein dem benutzerseitigen Endgerät zugeordnetes Smart-Meter-Gateway ermittelt. Diese Ermittlung kann beispielsweise über die zentralen Daten des Energieversorgungsunternehmens erfolgen. Nachfolgend wird eine verschlüsselte Verbindung zwischen dem Smart-Meter-Gateway und der Display-Service-Einheit sowie zwischen dem Smart-Meter-Gateway und der Client-Einheit aufgebaut. Hierbei wird für die Display-Service-Einheit ein zweites Zertifikat verwendet. Die Client-Einheit verfügt über ein drittes Zertifikat. Zu diesen aufgebauten Verbindungen wird eine Unteradresse in der Domain des ersten Zertifikats generiert, die zur Benutzung durch das benutzerseitige Endgerät vorgesehen ist. Die Unteradresse in der Domain des ersten Zertifikats verweist hierbei auf die Display-Service-Einheit. Erfindungsgemäß werden Anfragen von dem benutzerseitigen Endgerät an die Unteradresse über die verschlüsselten Verbindungen zwischen Display-Service-Einheit, Smart-Meter-Gateway und Client-Einheit geleitet. Die Client-Einheit empfängt die Anfrage von dem benutzerseitigen Endgerät und baut eine weitere Verbindung an einer HAN-Schnittstelle des Smart-Meter-Gateways auf. Alternativ kann sie auch auf eine bereits aufgebaute Verbindung zur HAN-Schnittstelle zurückgreifen. Das Smart-Meter-Gateway stellt für diese verschlüsselte Verbindung ein viertes Zertifikat für die HAN-Schnittstelle bereit. Abschließend wird auf die Anfrage über die verschlüsselten Verbindungen zwischen Display-Service-Einheit, Smart-Meter-Gateway und Client-Einheit geantwortet. Das erfindungsgemäße Verfahren stellt eine verschlüsselte Verbindung von einem benutzerseitigen Endgerät zu der HAN-Schnittstelle des Smart-Meter-Gateways bereit. Hierbei wird die konstruktiv durch das Smart-Meter-Gateway vorgesehene Sicherheitsstruktur beibehalten. Dies ist möglich, indem zwei verschiedene Zertifikate mit Adressen der Display-Service-Einheit vorgesehen sind, von denen eines die Verbindung mit der HAN-Schnittstelle authentifiziert. Zudem wird das Smart-Meter-Gateway in zweierlei Formen genutzt: Einerseits erfolgt eine Verbindung über die WAN-Schnittstelle, andererseits verbindet sich die Client-Einheit mit der HAN-Schnittstelle des Smart-Meter-Gateways.

Bevorzugt wird das von dem Smart-Meter-Gateway bereitgestellte vierte Zertifikat für die HAN-Schnittstelle unter Verwendung einer Domain der Display-Service-Einheit unterzeichnet. Dies bedeutet auch, dass bei der CSR-Anfrage (Certificate Signing Request) für das vierte Zertifikat, also dem Antrag auf Zertifizierung, die Anfragen der CA-Einheit (Certification Authority) unter Verwendung des Zertifikats für die Domain der Display-Service-Einheit bestätigt werden.

Bevorzugt wird der Vorgang der Unterzeichnung des vierten Zertifikats für die HAN-Schnittstelle über einen Gateway-Administrator abgewickelt. Der Gateway-Administrator kann beispielsweise auch eingesetzt werden, wenn die Display-Service-Einheit beim dem Smart-Meter-Gateway zu einem Verbindungsaufbau anfragt.

In einer weiter bevorzugten Ausgestaltung schaltet das Smart-Meter-Gateway nach dem Aufbau der Verbindungen in einen transparenten Proxy-Modus um. In dem transparenten Proxy-Modus ist sichergestellt, dass Daten unverändert durch das Smart-Meter-Gateway geleitet werden. Hierdurch wird sichergestellt, dass unveränderte Daten über die Client-Einheit an die Display-Service-Einheit und letztlich zu dem benutzerseitigen Endgerät gelangen.

Bevorzugt übernimmt die Display-Service-Einheit ein Verbindungsrouting zwischen dem benutzerseitigen Endgerät und der Client-Einheit, ohne die Daten einsehen oder verändern zu können. Es ist ferner möglich, für das zuvor beschriebene Verbindungsrouting ein anderes Smart-Meter-Gateway zu nutzen, als für den Aufbau der verschlüsselten Verbindung zwischen dem benutzerseitigen Endgerät und der HAN-Schnittstelle.

In einer bevorzugten Weiterbildung kann das benutzerseitige Endgerät einen Programmcode von der Display-Service-Einheit empfangen. Durch Ausführen des Programmcodes auf dem benutzerseitigen Endgerät können fortlaufend Daten von dem Smart-Meter-Gateway bezogen werden, wobei der Programmcode eine Zugangsauthentifizierung nutzt, um diesen mit den Daten gemeinsam auszuführen. Auf diese Weise können empfangene Daten beispielsweise graphisch dargestellt und aufbereitet werden.

In einer bevorzugten Ausgestaltung ist die verschlüsselte Verbindung als TLS-Verbindung oder als eine SSH-Verbindung aufgebaut.

Eine bevorzugte Ausgestaltung der Erfindung wird nachfolgend anhand eines Ausführungsbeispiels näher erläutert. Es zeigen:
- Fig. 1: einen schematischen Aufbau von TLS-Verbindungen,
- Fig. 2: die Kommunikation im Hinblick auf Daten und Programmcode,
- Fig. 3: eine Ausgestaltung mit einem User-Zertifikat user_HAN_Z,
- Fig. 4: der Ablauf von Programm und Daten über die verschlüsselten Verbindungen,
- Fig. 5: die Verbindungsstruktur bei mehreren relevanten Smart-Meter-Gateways sowie

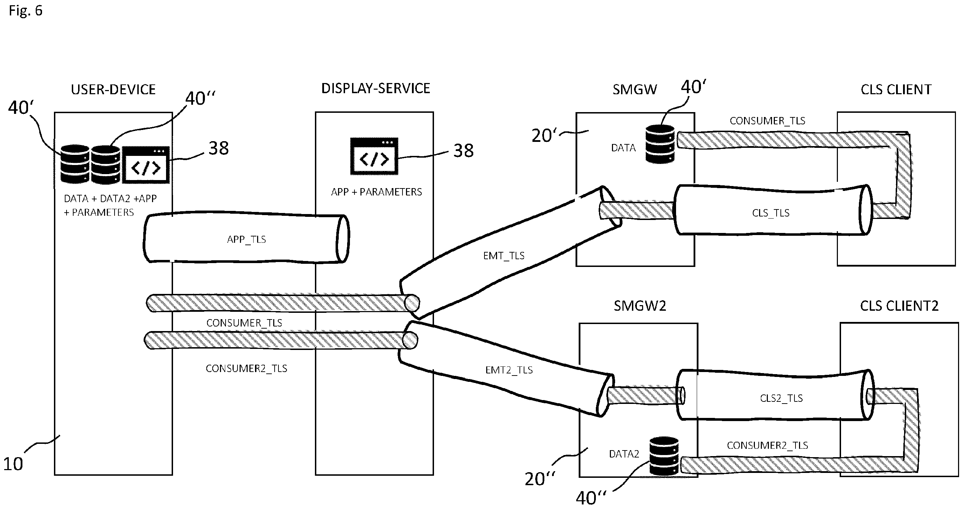

- Fig. 6: eine bevorzugte Ausgestaltung für Daten und Programmcode bei mehreren Smart-Meter-Gateways.

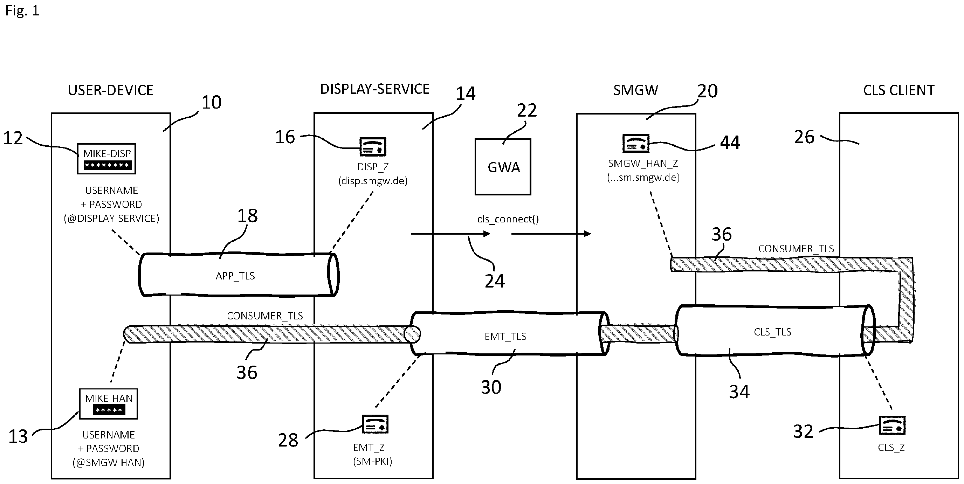

Der Verbindungsaufbau sei im Zusammenhang mit Fig. 1 erläutert:
Ein benutzerseitiges Endgerät 10 stellt für einen Benutzer die Möglichkeit bereit, sich mit Hilfe von Username und Passwort 12 an einer Display-Service-Einheit 14 anzumelden. Die Anmeldung an der Display-Service-Einheit 14 wird über ein Zertifikat DISP_Z 16 bestätigt, so dass eine sichere Verbindung 18 zustande kommt.
Die Anmeldung des benutzerseitigen Endgeräts 10 an der Display-Service-Einheit 14 kann durch Eingabe von Username/Passwort 12 oder durch ein anderes Authentifikationsverfahren erfolgen, wie beispielsweise durch ein starkes FIDO2-Verfahren. Die Anmeldung des benutzerseitigen Endgeräts 10 an einem Smart-Meter-Gateway 20 erfolgt über Usermame/Passwort 13 oder ein anderes Authentifikationsverfahren.

Die Display-Service-Einheit 14 ermittelt für den Kunden den oder die zugehörigen Zähler sowie ein dem Zähler zugeordnetes Smart-Meter-Gateway 20. Über einen Gateway-Administrator (GWA) 22 fordert die Display-Service-Einheit 14 eine Verbindung (cls_connect()) bei dem Smart-Meter-Gateway 20 und bei der zugehörigen Client-Einheit 26 (in den Figuren als "CLS CLIENT" bezeichnet) an. Dieser Schritt wird mit Hilfe eines unabhängigen Gateway-Administrators 22 umgesetzt, der von dem BSI für den Zugriff auf das Smart-Meter-Gateway zertifiziert wurde.

Das Smart-Meter-Gateway 20 baut eine Verbindung EMT_TLS 30 zur Display-Service-Einheit 14 auf. Hierzu wird ein zweites Zertifikat EMT_Z 28 zum Aufbau der Verbindung EMT_TLS 30 verwendet. Zu der Client-Einheit 26 wird unter Verwendung eines dritten Zertifikats 32 CLS_Z die Verbindung CLS_TLS 34 aufgebaut. Nach Einrichtung der beiden TLS-Verbindungen 30, 34 arbeitet das Smart-Meter-Gateway 20 als transparenter Proxy und leitet Daten vom EMT_TLS-Kanal 30 zum CLS_TLS-Kanal 34 sowie umgekehrt weiter. Bei dem transparenten Proxy verändert das Smart-Meter-Gateway die weitergeleiteten Daten nicht, sondern leitet sie unverändert weiter.

Die Display-Service-Einheit 14 stellt dem benutzerseitigen Endgerät 10 eine auf ihn lautende Unteradresse zur Verfügung und leitet Anfragen vom benutzerseitigen Endgerät 10 an diese Unteradresse unmittelbar unter Nutzung der Verbindung EMT_TLS 30 und CLS_TLS 34 an die Client-Einheit 26 weiter. Die Client-Einheit 26 leitet die Anfrage an die HAN-Schnittstelle des Smart-Meter-Gateways 20 weiter. Ein Beispiel für eine solche Unteradresse sei eTHE0123456789.sm.smgw.de, die als eine eindeutige Unteradresse in der Domain sm.smgw.de liegt. Die Unteradresse kann auch in Form einer IP-Adresse oder eines Netzwerk-Ports oder vergleichbarer Adressen angegeben werden.

Die Display-Service-Einheit kann durch eine Firewall vor unberechtigten Zugriffen auf die Unteradresse geschützt werden, indem die Display-Service-Einheit die Firewall ausschließlich und zeitlich begrenzt für den Kunden bzw. sein User-Device 10 öffnet, der sich gegenüber der Display-Service-Einheit authentifiziert hat. Eine zulässige Verbindung könnte beispielsweise auf Zugriffe einer Source-IP in Verbindung mit einer bereitgestellten Unteradresse beschränkt werden.

Zwischen dem benutzerseitigen Endgerät 10 und dem Smart-Meter-Gateway 20 wird für die Unteradresse ein weiterer Kanal als Consumer_TLS-Kanal 36 errichtet, der einen vertraulichen Datenaustausch zwischen der HAN-Schnittstelle des Smart-Meter-Gateways 20 mit dem benutzerseitigen Endgerät 10 sicherstellt. Die Display-Service-Einheit 14 übernimmt an dieser Stelle das Verbindungsrouting, ohne die Datenübertragung einsehen oder verändern zu können. Das Smart-Meter-Gateway 20 antwortet auf die Anfrage über den Consumer_TLS-Kanal 36, wobei die Antworten über diesen Kanal unmittelbar an das benutzerseitige Endgerät 10 weitergeleitet werden.

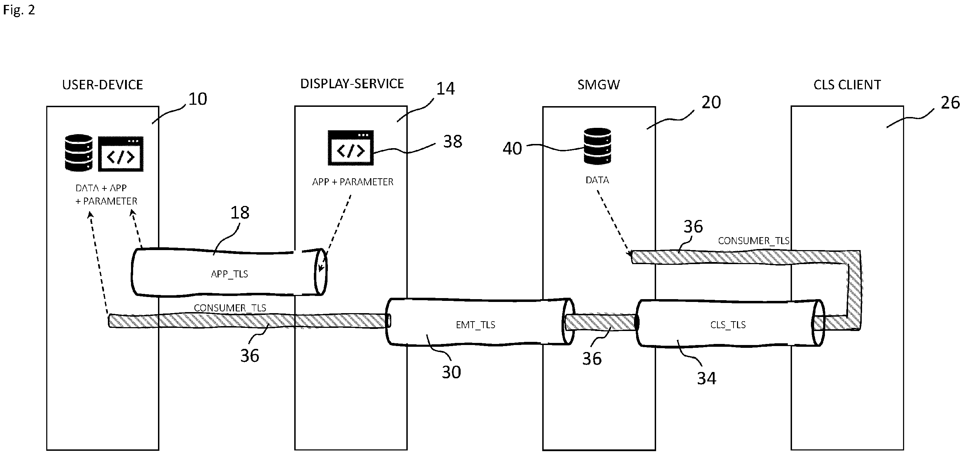

Wie Fig. 2 zeigt, kann das benutzerseitige Endgerät einen Programmcode 38 von der Display-Service-Einheit 14 beziehen, sowie Messdaten 40 von dem Smart-Meter-Gateway 20. Die Daten 40 vom Smart-Meter-Gateway 20 werden über die Kanäle 36, 34, 30 an das benutzerseitige Endgerät 10 übertragen. Der Programmcode 38 zur Darstellung der Daten wird über den APP_TLS-Kanal 18 an das benutzerseitige Endgerät 10 übertragen.

Das benutzerseitige Endgerät 10 führt den Programmcode 38 aus und bezieht dabei die Messwerte 40 aus dem Smart-Meter-Gateway 20 ein. Verwendet der Programmcode 38 hierzu eine Authentifizierung der Methode HTTP-digest (RFC7616), so kann beispielsweise sichergestellt werden, dass für die Authentifikation am Smart-Meter-Gateway 20 erforderliche Anmeldedaten, beispielsweise Username und Passwort, sicher durch einem Internetbrowser vom Benutzer erfasst und an das Smart-Meter-Gateway 20 übermittelt werden, ohne dass der Programmcode Zugriff auf die vom Benutzer bereitgestellten Anmeldedaten erlangt.

Das benutzerseitige Endgerät 10 kann die Verbindung beenden. Alternativ kann die Display-Service-Einheit 14 die Verbindung beenden, beispielsweise bei Inaktivität. Auch das Smart-Meter-Gateway kann die Verbindung beispielsweise nach einer maximalen Sitzungsdauer oder nach Vorgaben des Gateway-Administrators beenden.

Bei dem vorstehenden Verfahren können statt der bezeichneten TLS-Verbindung auch andere Verfahren für eine End-zu-End-Verschlüsselung genutzt werden, die sichere Verbindungen zwischen zwei Kommunikationssystemen gewährleisten, beispielsweise mittels einer über Secure Shell (SSH) gesicherten Verbindung.

Für das Verständnis der Sicherheit an dem obigen Ausführungsbeispiel ist es wichtig, dass es sich beim Weiterleiten im Sinne von Routing darum handelt, beispielsweise TCP/IP-Pakete weiterzuleiten, ohne die Verbindung zu terminieren.

Parameter 38 ist eine oder mehrere Unteradressen der in der Display-Service-Einheit 14 genutzten Hauptadresse. Beispielsweise ist die Unteradresse eTHE0123456789.sm.smgw.de bei gleichzeitiger Nutzung der Adresse smgw.de für das Zertifikat DISP_Z 16 nutzbar bzw. kann für das Erstellen eines Zertifikats zu einer Unteradresse einer CSR-Anfrage verwendet werden.

Für eine schnelle Bereitstellung von Messwerten ist es möglich, die TLS-Verbindung EMT_TLS 30 und CLS_TLS 34 dauerhaft aufrecht zu erhalten und damit eine Kommunikation zwischen Display-Service-Einheit 14 und Client-Einheit 26 zu ermöglichen, ohne dass zuvor der Aufbau der TLS-Verbindung erfolgen müsste. Es ist aber ebenfalls möglich, diese Verbindung erst bei Bedarf über eine Anforderung an das Smart-Meter-Gateway vom Smart-Meter-Gateway aufbauen zu lassen.

Zum besseren Verständnis des Sicherheitskonzepts seien nachfolgend die vorbereitenden Einrichtungen zur Herstellung eines HAN-Zertifikats im Smart-Meter-Gateway erläutert. Vorgesehen ist, dass der Gateway-Administrator 22 das Smart-Meter-Gateway 20 auffordert, ein CSR für das HAN-Zertifikat 44 zu erzeugen und dem Gateway-Administrator 22 auszuhändigen, damit dieser es durch eine CA-Einheit (Certification Authority) bestätigen lassen kann. Beim Ausstellen des HAN-Zertifikats 44 ist das Smart-Meter-Gateway 20 so eingerichtet, dass das Smart Meter Gateway 20 behauptet, Inhaber einer im Zertifikat enthaltenen Domain zu sein, die jedoch als der Display-Service-Einheit 14 zugeordnete Unteradresse aufgebaut ist, beispielsweise eTHE0123456789.sm.smgw.de. Anschließend wird die CSR-Anfrage vom Gateway-Administrator 22 an die Display-Service-Einheit 14 weitergeleitet, die diesen wiederum an eine CA-Einheit (Certification Authority) zur Prüfung und Signierung weiterleitet. Es ist auch denkbar, dass der Gateway-Administrator 22 die CSR-Anfrage unmittelbar an eine CA-Einheit weiterleitet. In diesem Fall hat die Display-Service-Einheit 14 hiervon jedoch keine Kenntnis und benötigt daher zusätzliche Angaben der CA, die diese für das Challenge-Response-Verfahren dem Gateway-Administrator bereitstellt. Der Gateway-Administrator leitet in diesem Fall die Challenge-Angaben an die Display-Service-Einheit weiter, damit diese das Challenge-Response-Verfahren abschließen kann. Auch in diesem Fall nutzt das Smart Meter Gateway jedoch Unteradressen, die der Domain des Display-Services zugehörig sind. Es gibt eine Vielzahl möglicher Challange-Response-Verfahren, die eine Certification Authority für eine Prüfung nutzen kann. Erfindungsgemäß beantwortet die Display-Service-Einheit die vom CA verlangte Prüfung an Stelle des Smart-Meter-Gateways.

Die CA-Einheit überprüft nun beispielsweise durch ein Challenge-Response-Verfahren, ob die behauptete Inhaberschaft der im Zertifikat genannten Domain nachgewiesen werden kann und sendet seine Prüfanfrage an die im Zertifikat genannte Adresse. Da die Adresse als Unteradresse der Display-Service-Einheit 14 aufgebaut ist, empfängt nun die Display-Service-Einheit 14 die Prüfanfrage und kann anschließend der Certification Authority die Challenge erfolgreich beantworten. Damit weist die Display-Service-Einheit statt des die Inhaberschaft behauptenden Smart-Meter-Gateways 20 die Kontrolle über die Domain nach. Nach erfolgreicher Prüfung der Kontrolle über die Domain signiert die Certification Authority das HAN-Zertifikat 44 des Smart-Meter-Gateways 20 und beantwortet die CSR-Anfrage durch Übermittlung des signierten HAN-Zertifikats. Die Antwort des Certification Signing Requests wird an das Smart-Meter-Gateway 20 weitergeleitet und das nunmehr signierte HAN-Zertifikat im Gateway gespeichert. Das Smart Meter Gateway 20 verfügt im Ergebnis über ein Zertifikat, welches der Domain des Display-Service-Einheit 14 zugeordnet und von einer Certification Authority signiert ist, ebenso über den zugehörigen privaten Schlüssel, den das Smart Meter Gateway 20 in seinem Hardware Sicherheitsmodul sicher speichert und anwendet.

Für einen unterbrechungsfreien Betrieb muss das HAN-Zertifikat jeweils vor Ablauf seiner Zertifikatslaufzeit erneuert werden. Dies erfolgt über eine erneute CSR-Anfrage an das Smart-Meter-Gateway, die über den Gateway-Administrator 22 erfolgt.

Der Programmcode 38 dient dazu, Messwerte in Form von Tabellen oder Grafiken optisch ansprechend aufbereitet zu präsentieren und auf Wunsch auch kontinuierlich Messwerte nachzuladen und die Anzeige mit neu eintreffenden Messwerten zu aktualisieren. Der ausgelieferte Programmcode 38 veranlasst zudem den Aufbau der vierten TLS-Verbindung 36 zum Smart-Meter-Gateway 20 und stellt dabei die Authentifikation des Letztverbrauchers an der HAN-Schnittstelle des Smart-Meter-Gateways sicher. Gängige Internetbrowser verfügen beispielsweise über Kundendialogfunktionen für die Eingabe von Passwörtern, sobald ein TLS-Kanal zu einer Subdomain aufgebaut wird und die Gegenstelle (hier das Smart-Meter-Gateway 20) eine Authentifizierung erfordert. Eine weit verbreitete und sehr sichere Methode ist beispielsweise der Zugriff auf Daten entsprechend dem Internetstandard Digest Access Authentication (RFC7616) für eine Authentifizierung vor dem Zugriff auf geschützte Daten. Indem die Übermittlung über ein Zertifikat für die erste TLS-Verbindung 18 verwendet wird, welches als Zertifikat 16 für die Domain vorgesehen ist und damit ein übergeordnetes Zertifikat für die HAN-Zertifikate definiert, kann der Programmcode auch Messwerte aus einer Vielzahl von Smart-Meter-Gateways nachladen und einheitlich darstellen.

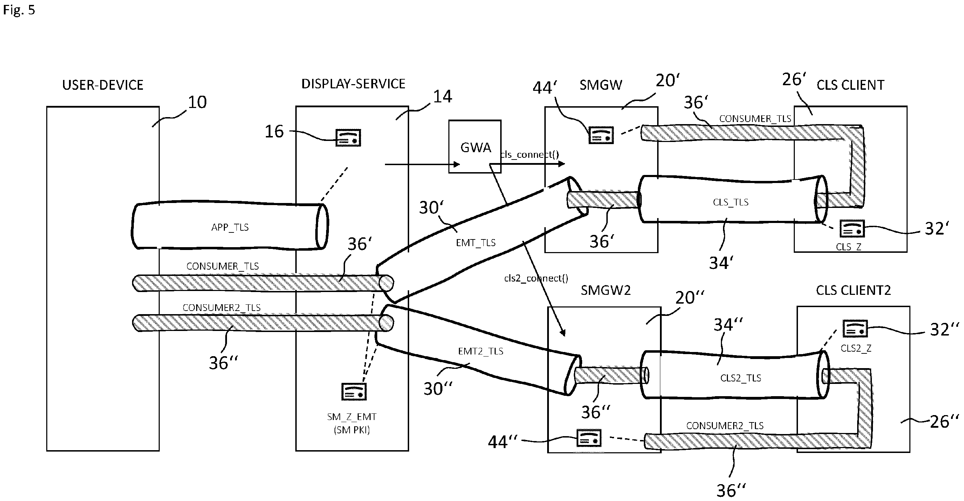

Fig. 5 zeigt beispielsweise die Verbindung der Display-Service-Einheit 14 zu einem ersten Smart-Meter-Gateway 20' und einem zweiten Smart-Meter-Gateway 20". In Fig. 5 sind Komponenten, die bau- und funktionsgleich zu dem Ausführungsbeispiel aus Fig. 1 sind, mit gleichen Bezugszeichen gekennzeichnet und Komponenten, die die gleiche Funktionsweise wie in dem Ausführungsbeispiel aus Fig. 1 besitzen, aber verdoppelt sind oder in ihrer Funktionalität variieren, sind durch Striche bzw. durch Doppelstriche gekennzeichnet. Es wird durch die Display-Service-Einheit 14 jeweils ein EMT_TLS-Kanal 30' und 30" aufgebaut. In an sich gleiche Weise können dann über die entsprechenden Client-Einheiten 26' und 26" dann Daten über die Consumer_TLS-Kanäle 36' und 36" gelesen und dem benutzerseitigen Endgerät 10 zur Verfügung gestellt werden. Für die Erstellung der HAN-Zertifikate 44' und 44" kann der mit Bezug auf Fig. 1 beschriebene Prozess für jedes Gateway durchlaufen werden, solange ein entsprechendes Zertifikat für die Domain in der Display-Service-Einheit 14 vorliegt. Auch im Hinblick auf den Programmcode 38 und die Daten 40' und 40" entspricht der Ablauf dem in Fig. 2 dargestellten Ablauf. Die Daten 40' gelangen über den entsprechenden gesicherten Kanal vom Smart-Meter-Gateway 20' zu dem benutzerseitigen Endgerät 10, so wie die Daten 40" von dem Smart-Meter-Gateway 20" zu dem benutzerseitigen Endgerät 10 gelangen. Der Programmcode 38 kann mit beiden Daten gemeinsam arbeiten, um diese graphisch darzustellen.

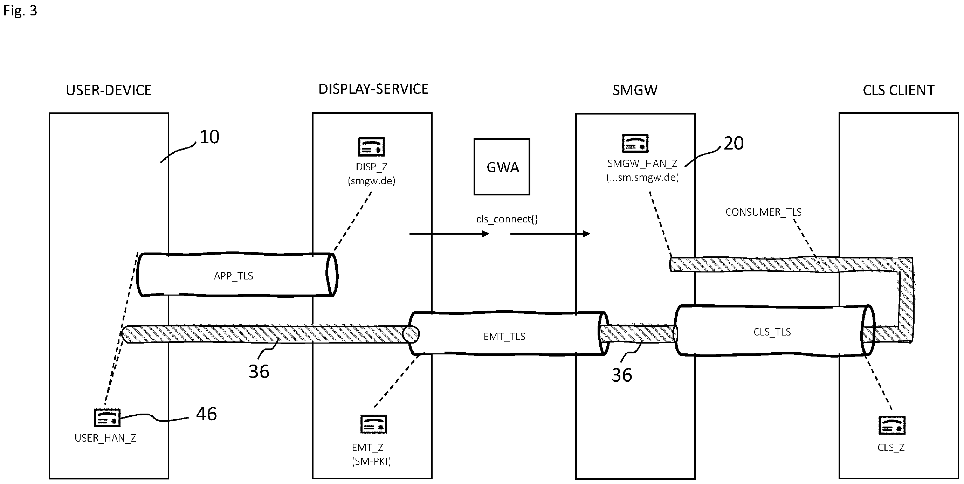

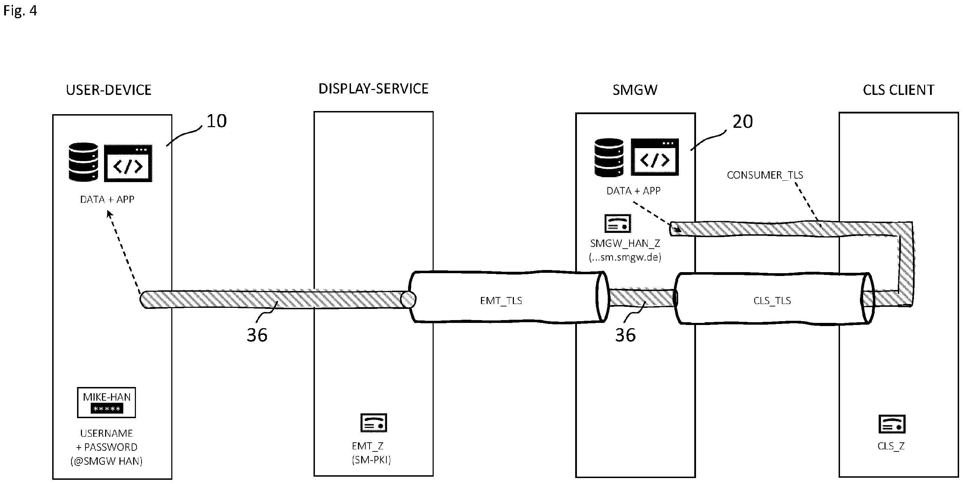

Die Figuren 3 und 4 zeigen eine Situation, bei der im benutzerseitigen Endgerät 10 ein benutzerseitiges HAN-Zertifikat 46 bereitgestellt ist, mit dem dieses Gerät sich zum Zugriff auf die HAN-Schnittstelle des Smart-Meter-Gateways 20 legitimiert. Wie Fig. 4 zeigt, erlaubt dies sowohl Daten als auch Programmcode aus dem Smart-Meter-Gateway 20 zu übertragen.

## Patentansprüche

1. Verfahren zur Herstellung einer verschlüsselten Verbindung zwischen einem benutzerseitigen Endgerät und einem Smart-Meter-Gateway mit einer WAN-Schnittstelle und einer HAN-Schnittstelle, bei dem eine Display-Service-Einheit und eine Client-Einheit bereitgestellt werden, wobei die Einheiten zum Aufbau einer verschlüsselten End-zu-End-Verbindung ausgebildet sind, mit folgenden Schritten:
a. Anmelden des benutzerseitigen Endgeräts für eine verschlüsselte Verbindung an der Display-Service-Einheit, wobei die Display-Service-Einheit über ein erstes Zertifikat (DISP_Z) verfügt,
b. Ermitteln von mindestens einem zugehörigen Smart-Meter-Gateway für das benutzerseitige Endgerät,
c. Aufbauen jeweils einer verschlüsselten Verbindung von dem ermittelten Smart-Meter-Gateway zu der Display-Service-Einheit und zu der Client-Einheit, wobei für die Display-Service-Einheit ein zweites Zertifikat (EMT_Z) und für die Client-Einheit ein drittes Zertifikat (CLS_Z) genutzt werden,
d. Generieren einer Unteradresse in der Domain des ersten Zertifikats zur Benutzung durch das benutzerseitige Endgerät, wobei die Unteradresse auf die Display-Service-Einheit verweist,
e. Anfragen von dem benutzerseitigen Endgerät an die Unteradresse werden über die verschlüsselten Verbindungen zwischen Display-Service-Einheit, Smart-Meter-Gateway und Client-Einheit geleitet,
f. Empfangen der Anfrage an der Client-Einheit, Weiterleitung der Anfrage an die HAN-Schnittstelle des Smart-Meter-Gateway und Aufbauen einer weiteren verschlüsselten Verbindung an der HAN-Schnittstelle des Smart-Meter-Gateways, wobei das Smart-Meter-Gateway für die Verbindung ein viertes Zertifikat (SMGW_HAN_Z) für die HAN-Schnittstelle bereitstellt, und
g. Antworten auf die Anfragen des benutzerseitigen Endgeräts an die HAN-Schnittstelle über die verschlüsselten Verbindungen zwischen Display-Service-Einheit, Smart-Meter-Gateway und Client-Einheit.

2. Verfahren nach Anspruch 1, **dadurch gekennzeichnet, dass** das von dem Smart-Meter-Gateway bereitgestellte vierte Zertifikat (SMGW_HAN_Z) für die HAN-Schnittstelle eine der Display-Service-Einheit zugeordneten Domain ausweist.

3. Verfahren nach Anspruch 1 oder 2, **dadurch gekennzeichnet, dass** die Unterzeichnung des Zertifikats für die HAN-Schnittstelle (SMGW_HAN_Z) über einen Gateway-Administrator (GWA) erfolgt.

4. Verfahren nach einem der Ansprüche 1 bis 3, **dadurch gekennzeichnet, dass** die Anmeldung des benutzerseitigen Endgeräts an der Display-Service-Einheit mit Hilfe eines Authentifizierungsverfahren erfolgt.

5. Verfahren nach einem der Ansprüche 1 bis 4, **dadurch gekennzeichnet, dass** die Display-Service-Einheit über den Gateway-Administrator (GWA) bei dem Smart-Meter-Gateway (SMGW) den Aufbau der verschlüsselten Verbindungen auslöst.

6. Verfahren nach einem der Ansprüche 1 bis 5, **dadurch gekennzeichnet, dass** das Smart-Meter-Gateway nach einem Aufbau der Verbindungen in einen transparenten Proxy-Modus schaltet, in dem Daten unverändert durchgeleitet werden.

7. Verfahren nach einem der Ansprüche 1 bis 6, **dadurch gekennzeichnet, dass** die Display-Service-Einheit ein Verbindungsrouting zwischen dem benutzerseitigen Endgerät und der Client-Einheit übernimmt.

8. Verfahren nach einem der Ansprüche 1 bis 7, **dadurch gekennzeichnet, dass** das benutzerseitige Endgerät Programmcode und/oder Parameter von der Display-Service-Einheit empfangen kann.

9. Verfahren nach einem der Ansprüche 1 bis 8, **dadurch gekennzeichnet, dass** der Programmcode eine sichere Browswer-Funktion zur Zugangsauthentifizierung nutzt, um Daten aus dem Smart Meter Gateway beziehen zu können.

10. Verfahren nach einem der Ansprüche 8 oder 9, **dadurch gekennzeichnet, dass** das benutzerseitige Endgerät den Programmcode ausführt und fortlaufend Daten von dem Smart-Meter-Gateway bezieht,

11. Verfahren nach einem der Ansprüche 1 bis 10, **dadurch gekennzeichnet, dass** die verschlüsselten Verbindungen als TLS-Verbindungen und/oder als SSH-Verbindungen aufgebaut werden.

12. Verfahren nach einem der Ansprüche 1 bis 11, **dadurch gekennzeichnet, dass** die Display-Service-Einheit erst nach Anmeldung des benutzerseitigen Endgeräts an der Display-Service-Einheit die Weiterleitung von Anfragen durch das benutzerseitige Endgerät mittels einer andere Zugriffe blockierenden Firewall ermöglicht und nach Abbau der Verbindung die Firewall weitere Zugriffe wieder blockiert,

13. Verfahren nach einem der Ansprüche 1 bis 12, **dadurch gekennzeichnet, dass** für die Schritte c und f unterschiedliche Smart Meter Gateways zum Einsatz kommen.

## Claims

1. A method for producing an encrypted connection between a user-side end device and a smart meter gateway with a WAN interface and a HAN interface, in which a display service unit and a client unit are provided, wherein the units are designed to establish an encrypted end-to-end connection, with the following steps:
a. Logging in of the user-side end device for an encrypted connection to the display service unit, wherein the display service unit has a first certificate (DISP_Z),
b. Determining at least one associated smart meter gateway for the user-side end device,
c. Establishing an encrypted connection in each case from the determined smart meter gateway to the display service unit and to the client unit, wherein a second certificate (EMT Z) is used for the display service unit and a third certificate (CLS Z) is used for the client unit,
d. Generating a sub-address in the domain of the first certificate for use by the user-side end device, wherein the sub-address refers to the display service unit,
e. Queries from the user-side end device to the sub-address are directed via the encrypted connections between the display service unit, smart meter gateway, and client unit,
f. Receiving the query on the client unit, forwarding the query to the HAN interface of the smart meter gateway, and establishing another encrypted connection to the HAN interface of the smart meter gateway, wherein, for the connection, the smart meter gateway provides a fourth certificate (SMGW_HAN_Z) for the HAN interface, and
g. Responding to the queries of the user-side end device to the HAN interface via the encrypted connections between the display service unit, smart meter gateway, and client unit.

2. The method according to claim 1, **characterized in that** the fourth certificate (SMGW_HAN_Z) provided by the smart meter gateway for the HAN interface has a domain associated with the display service unit.

3. The method according to claim 1 or 2, **characterized in that** the certificate for the HAN interface (SMGW_HAN_Z) is signed via a gateway administrator (GWA).

4. The method according to one of claims 1 to 3, **characterized in that** the user-side end device is logged in to the display service unit with the aid of an authentication method.

5. The method according to one of claims 1 to 4, **characterized in that** the display service unit triggers the establishment of the encrypted connections via the gateway administrator (GWA) at the smart meter gateway (SMGW).

6. The method according to one of claims 1 to 5, **characterized in that**, after the connections are established, the smart meter gateway switches to a transparent proxy mode in which data pass through unchanged.

7. The method according to one of claims 1 to 6, **characterized in that** the display service unit assumes connection routing between the user-side end device and the client unit.

8. The method according to one of claims 1 to 7, **characterized in that** the user-side end device can receive program code and/or parameters from the display service unit.

9. The method according to one of claims 1 to 8, **characterized in that** the program code uses a secure browser function for access authentication in order to be able to obtain data from the smart meter gateway.

10. The method according to one of claims 8 or 9, **characterized in that** the user-side end device executes the program code and continuously obtains data from the smart meter gateway.

11. The method according to one of claims 1 to 10, **characterized in that** the encrypted connections are established as TLS connections and/or as SSH connections.

12. The method according to one of claims 1 to 11, **characterized in that** the display service unit enables the forwarding of queries by the user-side end device by means of a firewall blocking other accesses only after logging in of the user-side end device to the display service unit and the firewall blocks further accesses again after the connection is terminated.

13. The method according to one of claims 1 to 12, **characterized in that** different smart meter gateways are used for the steps c and f.

## Revendications

1. Procédé de génération d'une connexion cryptée entre un terminal côté utilisateur et une passerelle de compteur intelligent avec une interface WAN et une interface HAN, dans lequel une unité de service d'affichage et une unité client sont mises à disposition, les unités étant conçues pour établir une connexion de bout en bout cryptée, comprenant les étapes suivantes :
a. enregistrement du terminal côté utilisateur pour une connexion cryptée au niveau de l'unité de service d'affichage, l'unité de service d'affichage disposant d'un premier certificat (DISP_Z),
b. détermination d'au moins une passerelle de compteur intelligent pour le terminal côté utilisateur,
c. établissement d'une connexion cryptée de la passerelle de compteur intelligent vers l'unité de service d'affichage et vers l'unité client, un deuxième certificat (EMT Z) étant utilisé pour l'unité de service d'affichage et un troisième certificat (CLS_Z) étant utilisé pour l'unité client,
d. génération d'une sous-adresse dans le domaine du premier certificat pour l'utilisation par le terminal côté utilisateur, la sous-adresse se rapportant à l'unité de service d'affichage,
e. les demandes du terminal côté utilisateur à la sous-adresse sont dirigées entre l'unité de service d'affichage, la passerelle de compteur intelligent et l'unité client par le biais des connexions cryptées,
f. réception de la demande au niveau de l'unité client, transmission de la demande à l'interface HAN de la passerelle de compteur intelligent et établissement d'une autre connexion cryptée au niveau de l'interface HAN de la passerelle de compteur intelligent, la passerelle de compteur intelligent mettant à disposition un quatrième certificat (SMGW_HAN_Z) pour l'interface HAN pour la connexion, et
g. réponse aux demandes du terminal côté utilisateur au niveau de l'interface HAN par le biais des connexions cryptées entre l'unité de service d'affichage, la passerelle de compteur intelligent et l'unité client.

2. Procédé selon la revendication 1, **caractérisé en ce que** le quatrième certificat (SMGW_HAN_Z) mis à disposition par la passerelle de compteur intelligent pour l'interface HAN présente un domaine attribué à l'unité de service d'affichage.

3. Procédé selon la revendication 1 ou 2, **caractérisé en ce que** la signature du certificat pour l'interface HAN (SMGW_HAN_Z) est effectuée par le biais d'un administrateur de passerelle (GWA).

4. Procédé selon l'une des revendications 1 à 3, **caractérisé en ce que** l'enregistrement du terminal côté utilisateur au niveau de l'unité de service d'affichage est effectué à l'aide d'un procédé d'authentification.

5. Procédé selon l'une des revendications 1 à 4, **caractérisé en ce que** l'unité de service d'affichage déclenche l'établissement de la connexion cryptée au niveau de la passerelle de compteur intelligent (SMGW) par le biais de l'administrateur de passerelle (GWA).

6. Procédé selon l'une des revendications 1 à 5, **caractérisé en ce qu'**après l'établissement des connexions, la passerelle de compteur intelligent passe dans un mode proxy transparent, dans lequel des données sont transmises dans modification.

7. Procédé selon l'une des revendications 1 à 6, **caractérisé en ce que** l'unité de service d'affichage assure un routage de connexion entre le terminal côté utilisateur et l'unité client.

8. Procédé selon l'une des revendications 1 à 7, **caractérisé en ce que** le terminal côté utilisateur peut recevoir des codes de programme et/ou des paramètres depuis l'unité de service d'affichage.

9. Procédé selon l'une des revendications 1 à 8, **caractérisé en ce que** le code de programme utilise une fonction de navigateur sécurisée pour l'authentification d'accès, afin de collecter des données à partir de la passerelle de compteur intelligent.

10. Procédé selon l'une des revendications 8 ou 9, **caractérisé en ce que** le terminal côté utilisateur exécute le code de programme et collecte en continu des données à partir de la passerelle de compteur intelligent.

11. Procédé selon l'une des revendications 1 à 10, **caractérisé en ce que** les connexions cryptées sont établies comme des connexions TLS et/ou comme des connexions SSH.

12. Procédé selon l'une des revendications 1 à 11, **caractérisé en ce que** l'unité de service d'affichage ne permet la transmission de demandes par le terminal côté utilisateur au moyen d'un pare-feu bloquant d'autres accès qu'après l'enregistrement du terminal côté utilisateur au niveau de l'unité de service d'affichage et le pare-feu bloque à nouveau d'autres accès après suppression de la connexion.

13. Procédé selon l'une des revendications 1 à 12, **caractérisé en ce que** des passerelles de compteur intelligent différentes sont utilisées pour les étapes c et f.
